(19) Europäisches Patentamt
European Patent Office
Office européen des brevets

(11) **EP 4 093 102 A1**

(12) **EUROPEAN PATENT APPLICATION**
published in accordance with Art. 153(4) EPC

(43) Date of publication:
**23.11.2022 Bulletin 2022/47**

(21) Application number: **20915676.9**

(22) Date of filing: **20.01.2020**

(51) International Patent Classification (IPC):
**H04W 56/00** (2009.01)    **H04W 24/02** (2009.01)

(52) Cooperative Patent Classification (CPC):
**H04W 24/02; H04W 56/00**

(86) International application number:
**PCT/CN2020/073318**

(87) International publication number:
**WO 2021/146866 (29.07.2021 Gazette 2021/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **FU, Zhe
  Dongguan, Guangdong 523860 (CN)**
• **SHI, Cong
  Dongguan, Guangdong 523860 (CN)**
• **YANG, Ning
  Dongguan, Guangdong 523860 (CN)**

(74) Representative: **Manitz Finsterwald
Patent- und Rechtsanwaltspartnerschaft mbB
Martin-Greif-Strasse 1
80336 München (DE)**

(54) **TIME ADJUSTMENT METHOD AND SYSTEM, DEVICE AND STORAGE MEDIUM**

(57) Embodiments of the present application provide a time adjustment method and a system, a device, and a storage medium. A terminal can receive indication information from a network device, where the indication information is used to indicate whether the terminal adjusts time information of the terminal; thus, when the indication information indicates that the terminal adjusts the time information, the terminal adjusts the time information. The technical solution provided by the embodiments of the present application can reduce negative effects of a transmission delay on a clock synchronization process, and is beneficial to realize clock synchronization between the terminal and the network device.

FIG. 5

## Description

## TECHNICAL FIELD

Embodiments of the present application relate to communication technologies, and in particular, to a time adjustment method and a system, a device, and a storage medium.

## BACKGROUND

In a communication network, it is generally required that a clock between a terminal and a network device are strictly synchronized. During clock synchronization, one side can acquire a clock of the other side based on unicast signaling or broadcast signaling between the two sides, and then adjust the clock per se to realize synchronization. In a strict clock synchronization process, it is also necessary to consider a clock synchronization error caused by a transmission delay generated by the signaling on a transmission path. In this case, the transmission delay can be compensated by a timing advance (Timing Advance, TA).

The network device can receive a random access preamble (Random Access Preamble, RA Preamble) from the terminal, and determine the TA accordingly, so that a random access response (Random Access Response, RAR) sent by the network device to the terminal carries the TA. In this way, after receiving the TA, the terminal uses the TA by default to adjust clock information per se.

In prior art, the RAR received by the terminal carries the TA, but whether the terminal needs to compensate the transmission delay is not indicated, and the terminal uses the TA for time adjustment by default. In other possible implementation scenarios, the network device may pre-compensate the transmission by other means, or, in some possible implementation scenarios, due to small transmission delay of the air interface, the terminal does not need to use TA for adjustment. If the terminal uses the TA by default to adjust the time according to the existing time synchronization method, it may lead to serious loss of synchronization of clocks (referred to as "non-synchronised").

## SUMMARY

Embodiments of the present application provide a time adjustment method and a system, a device, and a storage medium, which are used to reduce negative effects of a transmission delay on a clock synchronization process, and are beneficial to realize clock synchronization between a terminal and a network device.

In a first aspect, an embodiment of the present application may provide a time adjustment method, which is applied to a terminal, and the method includes:

receiving indication information from a network device, wherein the indication information is used to indicate whether a terminal adjusts time information of the terminal; and
when the indication information indicates that the terminal adjusts the time information, adjusting the time information.

In a second aspect, an embodiment of the present application may provide a time adjustment method, which is applied to a network device, and the method includes:

acquiring indication information, wherein the indication information is used to indicate a terminal whether the terminal adjusts time information of the terminal; sending the indication information to the terminal, to enable the terminal to adjust the time information when the indication information indicates that the terminal needs to adjust the time information.

In a third aspect, an embodiment of the present application may provide a terminal, including:

a transceiving module, configured to receive indication information from a network device, wherein the indication information is used to indicate whether the terminal adjusts time information of the terminal; and
a processing module, configured to adjust the time information when the indication information indicates that the terminal adjusts the time information.

In a fourth aspect, an embodiment of the present application may provide a network device, including:

a processing module, configured to acquire indication information, wherein the indication information is used to indicate a terminal whether the terminal adjusts time information of the terminal
a transceiving module, configured to send the indication information to the terminal, to enable the terminal to adjust the time information when the indication information indicates that the terminal needs to adjust the time information.

In a fifth aspect, an embodiment of the present application may provide a terminal, including:

a processor, a memory, a communication interface; the memory stores a computer-executable instruction;
the processor executes the computer-executable instruction stored in the memory, so that the processor executes the method according to the first aspect.

In a sixth aspect, an embodiment of the present application may provide a network device, including:

a processor, a memory, a communication interface;
the memory stores a computer-executable instruction;
the processor executes the computer-executable instruction stored in the memory, so that the processor executes the method according to the second aspect.

In a seventh aspect, an embodiment of the present application provides a communication system, including:

a terminal, configured to execute the method according to the first aspect; and
a network device, configured to execute the method according to the second aspect.

In an eighth aspect, an embodiment of the present application provide a computer-readable storage medium, where the computer-readable storage medium has a computer-executable instruction stored thereon, and when the computer-executable instruction is executed by a processor, the computer-readable storage medium is configured to execute the method according to the first aspect or the second aspect.

In a ninth aspect, an embodiment of the present application provides a chip, including: a processor, configured to call and run a computer program from a memory, so that a device installed with the chip executes the method according to the first aspect or the second aspect.

In a tenth aspect, an embodiment of the present application provides a computer program product, including computer program instructions that cause a computer to execute the method according to the first aspect or the second aspect.

In an eleventh aspect, an embodiment of the present application further provides a computer program, where the computer program causes a computer to execute the foregoing method according to the first aspect or the second aspect.

In the time adjustment method and system, device, and storage medium provided by the embodiments of the present application, a network device may send indication information to a terminal, to indicate whether the terminal needs to adjust time information of the terminal; thus, after the terminal receives the indication information, only when the indication information indicates that the terminal adjusts its time, the terminal will adjust the time information per se. In this way, the terminal can adjust the time information per se based on the indication information, so that when a clock non-synchronised situation between the terminal and the network device is slight, there is no need to adjust the time information of the terminal, thereby saving resources of the terminal; and, if the clock non-synchronised situation has been pre-compensated by other means, there is no need for the terminal to perform secondary compensation on the transmission delay, so as to avoid the possibility of aggravating the clock non-synchronised situation caused by performing compensation on the transmission delay repeatedly. Therefore, the technical solutions provided by the embodiments of the present application can reduce negative effects of the transmission delay on a clock synchronization process to some extent, and are beneficial to realize clock synchronization between the terminal and the network device.

**BRIEF DESCRIPTION OF DRAWINGS**

In order to describe the technical solutions in the embodiments of the present application or prior art more clearly, in the following, drawings that need to be used in the description of the embodiments or prior art will be introduced briefly. Obviously, the drawings described below are some embodiments of the present application, and for those of skilled in the art, other drawings can be obtained based on these drawings without paying creative efforts.

FIG. 1 is provided by the present application;
FIG. 2 is a schematic diagram of an interaction flow of a clock synchronization solution in a 5G network in the prior art;
FIG. 3 is a schematic diagram of an interaction flow of a non-contention-based random access manner in the prior art;
FIG. 4 is the schematic diagram of an RAR in the prior art;
FIG. 5 is a schematic diagram of an interaction flow of a time adjustment method provided by an embodiment of the present application;
FIG. 6 is a schematic diagram of an interaction flow of another time adjustment method provided by an embodiment of the present application;
FIG. 7 is a schematic diagram of an interaction flow of another time adjustment method provided by an embodiment of the present application;
FIG. 8 is a schematic diagram of an interaction flow of another time adjustment method provided by an embodiment of the present application;
FIG. 9 is a schematic diagram of an RAR provided by an embodiment of the present application;
FIG. 10 is a schematic diagram of another RAR provided by an embodiment of the present application;
FIG. 11 is a schematic diagram of another RAR provided by an embodiment of the present application;
FIG. 12 is a schematic diagram of another RAR provided by an embodiment of the present application;
FIG. 13 is a schematic diagram of another RAR provided by an embodiment of the present application;
FIG. 14 is a schematic diagram of another RAR provided by an embodiment of the present application;
FIG. 15 is a schematic diagram of another RAR provided by an embodiment of the present application;
FIG. 16 is a schematic diagram of another RAR provided by an embodiment of the present application;

FIG. 17 is a schematic diagram of a clock adjustment manner in an embodiment of the present application;
FIG. 18 is a schematic diagram of a relationship between a TAT and the time adjustment method in an embodiment of the present application;
FIG. 19 is a schematic structural diagram of a terminal provided by the present application;
FIG. 20 is a schematic structural diagram of a network device provided by the present application;
FIG. 21 is another schematic structural diagram of a terminal provided by the present application; and
FIG. 22 is another schematic structural diagram of a network device provided by the present application.

## DESCRIPTION OF EMBODIMENTS

In order to make the purpose, technical solutions and advantages of embodiments of the present application clearer, the technical solutions in the embodiments of the present application will be described as follows clearly and completely in conjunction with accompanying drawings in the embodiments of the present application. Apparently, the described embodiments are a part rather than all of the embodiments of the present application. Based on the embodiments in the present application, all other embodiments obtained by those of ordinary skill in the art without paying creative work shall fall within the protection scope of the present application.

The terms "first", "second" and the like in the description, claims and the above-mentioned drawings of the embodiments of the present application are used to distinguish similar objects, and are not necessarily used to describe a specific order or sequence. It should be understood that the data so used may be interchanged under appropriate circumstances, such that the embodiments of the present application described herein can, for example, be implemented in sequences other than those shown in the drawings or described herein. Furthermore, the terms "comprising" and "having" and any variations thereof, are intended to cover non-exclusive inclusion, for example, a process, method, system, product or device comprising a series of steps or units is not necessarily limited to those steps or units which have been clearly listed, but may include other steps or units which have not been clearly listed or are inherent to the process, method, product or device.

The technical solutions in the embodiments of the present application will be described as follows in conjunction with accompanying drawings in the embodiments of the present application. Obviously, the described embodiments are a part rather than all of the embodiments of the present application. Based on the embodiments in the present application, all other embodiments obtained by those of ordinary skill in the art without paying creative work shall fall within the protection scope of the present application.

The technical solutions of the embodiments of the present application can be applied to various communication systems, such as: a global system of mobile communication (Global System of Mobile communication, GSM) system, a code division multiple access (Code Division Multiple Access, CDMA) system, a wideband code division multiple access (Wideband Code Division Multiple Access, WCDMA) system, General Packet Radio Service (General Packet Radio Service, GPRS), a long term evolution (LTE) system, an LTE frequency division duplex (Frequency Division Duplex, FDD) system, an LTE time division duplex (Time Division Duplex, TDD), an advanced long term evolution (Advanced long term evolution, LTE-A) system, a New Radio (New Radio, NR) system, an evolution system of an NR system, an NR-based access to unlicensed spectrum (NR-based access to unlicensed spectrum, NR-U) system, a universal mobile telecommunication system (Universal Mobile Telecommunication System, UMTS), a worldwide interoperability for microwave access (Worldwide Interoperability for Microwave Access, WiMAX) communication system, wireless fidelity (Wireless Fidelity, WiFi), or a next-generation communication system or the like.

Generally speaking, traditional communication systems support a limited number of connections and are easy to be implemented. However, with the development of communication technology, mobile communication systems will not only support traditional communication, but will also support, for example, device-to-device (Device to Device, D2D) communication, machine-to-machine (Machine to Machine, M2M) communication, machine type communication (Machine Type Communication, MTC), and vehicle-to-vehicle (Vehicle to Vehicle, V2V) communication, etc., and the embodiments of the present application can also be applied to these communication systems.

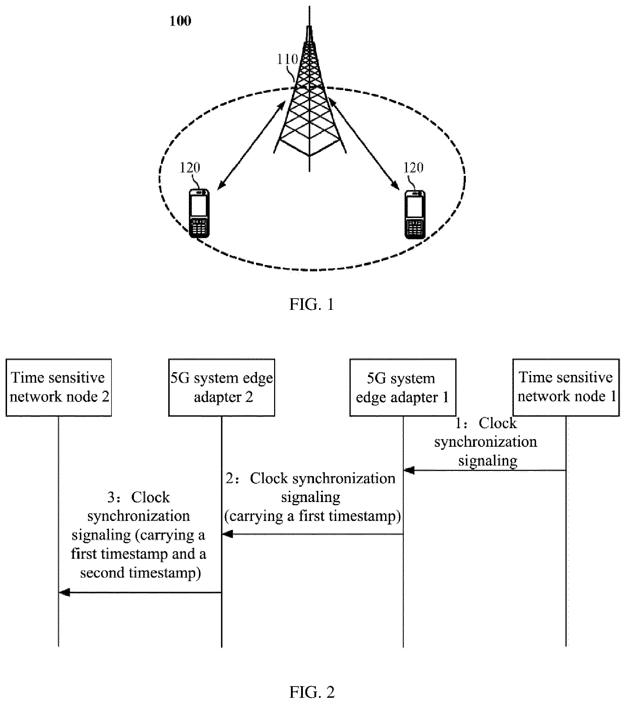

Exemplarily, a communication system 100 to which an embodiment of the present application is applied is shown in FIG. 1. The communication system 100 may include a network device 110, and the network device 110 may be a device that communicates with a terminal 120 (or referred to as a communication terminal, a terminal device). The network device 110 can provide communication coverage for a specific geographic area, and can communicate with terminals located within the coverage area. Optionally, the network device 110 may be a base station (Base Transceiver Station, BTS) in a GSM system or a CDMA system, or a base station (NodeB, NB) in a WCDMA system, or an evolutional base station (Evolutional Node B, eNB or eNodeB) in an LTE system, or a wireless controller in a cloud radio access network (Cloud Radio Access Network, CRAN), or the network device may be a mobile switching center, a relay station, an access point, an in-vehicle device, a wearable device, a hub, a switch, a network bridge, a router, a network-side device in a 5G network or a network device in a future evolved public land mobile network (Public Land Mobile Network, PLMN), etc.

The communication system 100 further includes at least one terminal 120 located within a coverage area of the network device 110. As used herein, a "terminal" includes but is not limited to devices connected via wired lines, such as connected via public switched telephone networks (Public Switched Telephone Networks, PSTN), digital subscriber line (Digital Subscriber Line, DSL), digital cable and direct cable; and/or another data connection/network; and/or via a wireless interface, such as a cellular network, a WLAN, a digital television network such as a DVB-H network, a satellite network, an AM-FM broadcast transmitter; and/or an apparatus of another terminal device arranged to receive/send communication signals; and/or internet of things (Internet of Things, IoT). A terminal device arranged to communicate through a wireless interface may be referred to as a "wireless communication terminal", a "wireless terminal" or a "mobile terminal". Examples of mobile terminals include but are not limited to satellites or cellular phones; personal communications system (Personal Communications System, PCS) terminal which can combine a cellular radio telephone with data processing, fax and data communication capabilities; a personal digital processing (Personal Digital Assistant, PDA) device that may include radio telephones, beepers, internet/intranet access, Web browsers, notebooks, calendars, and/or global positioning system (Global Positioning System, GPS) receivers; and conventional laptop and/or palmtop receivers or other electronic devices including radio telephone transceivers. Terminal devices may refer to access terminals, user equipments (User Equipment, UE), user units, user stations, mobile stations, mobile terminations, remote stations, remote terminals, mobile devices, user terminals, terminals, wireless communication devices, user agents or user apparatuses. Access terminals may be cellular phones, cordless phones, session initiation protocol (Session Initiation Protocol, SIP) phones, wireless local loop (Wireless Local Loop, WLL) stations, PDA devices, handheld devices with a wireless communication function, computing devices or other processing devices connected to wireless modems, vehicle-mounted devices, wearable devices, terminal devices in 5G network or terminal devices in future evolved PLMN, etc.

Optionally, a D2D communication may be performed between the terminals 120.

Optionally, a 5G system or 5G network may also be referred as a new radio (New Radio, NR) system or a NR network.

FIG. 1 exemplarily shows one network device 110 and two terminal devices 120. The communication system 100 may include a plurality of network devices 110, and the coverage of each network device 110 may include other numbers of (one or a plurality of) terminal devices 120, which is not limited in the embodiments of the present application.

In FIG. 1, the network device may be an access device, for example, an access device in an NR-U system, such as a 5G NR base station (next generation Node B, gNB) or a small cell, a micro cell, or a relay station, a transmission and reception point (Transmission and Reception Point, TRP), a road side unit (Road Side Unit, RSU), etc.

The terminal may refer to a mobile terminal, a UE, an access terminal, a user unit, a user station, a mobile station, a mobile platform, a user terminal, a terminal, a wireless communication equipment, a user agent or a user device. Specifically, it may be can be a smart phone, a cellular phone, a cordless phone, a PDA device, a handheld device with wireless communication functions or other processing devices connected to wireless modems, a on-board device, or a wearable device. In the embodiments of the present application, the terminal has an interface for communicating with a network (for example, a cellular network).

Optionally, the communication system 100 may further include other network entities such as, a network controller and a mobile management entity, which are not limited in the embodiments of the present application.

It should be understood that, in the embodiments of the present application, a device having a communication function in the network/system may be referred to as a communication device. Taking the communication system 100 shown in FIG. 1 as an example, the communication device may include the network device 110 and the terminal 120 with communication functions, and the network device 110 and the terminal device 120 may be the specific devices described above, which will not be repeated herein. The communication device may further include other devices in the communication system 100, for example, other network entities such as, a network controller and a mobile management entity etc., which is not limited in the embodiments of the present application.

It should be understood that the terms "system" and "network" herein are often used interchangeably herein. The term "and/or" herein is merely an association relationship describing associated objects, and represents that there may be three relationships. For example, A and/or B may represent three situations: presence of A only, of both A and B, and of B only. In addition, the character "/" herein generally represents an "or" relationship between contextual objects.

In the embodiments of the present application, clock synchronization may be implemented between the terminal and the network device based on unicast signaling or broadcast signaling transceived therebetween.

Exemplarily, FIG. 2 shows a schematic diagram of an interaction flow of a clock synchronization method in a 5G network, and the method specifically includes the following three steps:

Step 1: a time sensitive network (Time sensitive network, TSN) node (node) 1 at the right end sends clock synchronization signaling to a 5GS (5G System, 5G system) edge adapter 1.

It should be understood that the clock synchronization signaling carries a sending moment indicating when the TSN node 1 sends the clock synchronization signaling, which may be denoted as $T_{right}$. Besides, for the convenience of description, a transmission duration of the clock synchronization signaling in the transmission step is denoted as D1.

A time synchronization instruction may be specifically: a gPTP sync message.

Step 2, the 5GS edge adapter 1 sends clock synchronization signaling to a 5GS edge adapter 2, where the clock synchronization signaling carries a first timestamp TSi, and the TSi is a receiving moment indicating when the 5GS edge adapter 1 receives the clock synchronization signaling.

The 5GS edge adapter 1 and the 5GS edge adapter 2 both use 5G internal clocks, and the clocks of the two are synchronized.

Step 3: the 5GS edge adapter 1 sends clock synchronization signaling to a time sensitive network node (TSN node) 2 at the right end. In this case, the clock synchronization signaling includes the first timestamp TSi and a second timestamp TSe, where the TSe is a receiving moment indicating when the 5GS edge adapter 2 receives the clock synchronization signaling.

Therefore, the transmission duration of the clock synchronization signaling in the 5G network is TSe-TSi. Besides, for the convenience of description, a transmission duration of the clock synchronization signaling in the transmission step is denoted as D2.

In a possible embodiment shown in FIG. 2, the 5GS edge adapter 1 can be a network device, the TSN node1 on the right can be another external device connected to the network device, and the 5GS edge adapter 1 can be a terminal, the TSN node2 on the left can be specifically an external device connected to the terminal.

After the process in FIG. 2, the network device can transmit a clock synchronization instruction to the terminal, and the terminal can complete the time synchronization. That is to say, the TSN node2 on the left can adjust the clock per se (denoted as $T_{left}$) to:

$$T_{left}=T_{right}+TSe-TSi+ D1+ D2$$

In the time synchronization scenario based on the 5G network shown in FIG. 2, the clock synchronization of the TSN node1 and the TSN node2 can be realized only on the premise that the clocks of the TSe and the TSi are synchronized. The clocks of the TSe and the TSi are synchronized, that is, the clocks of the terminal and the network device need to be strictly synchronized.

When realizing the clock synchronization between the terminal and the network device, the terminal can receive unicast signaling, broadcast signaling or downlink data from the network device, and acquire time information of the network device based on these signaling or data. However, considering a transmission delay of the signaling (or data), in order to obtain better synchronization performance, time information of the terminal can be adjusted by TA to realize time synchronization.

The TA may be determined by the network device. In this case, the time synchronization process can be implemented based on a random access process. Further, it can be implemented based on a contention-free random access process.

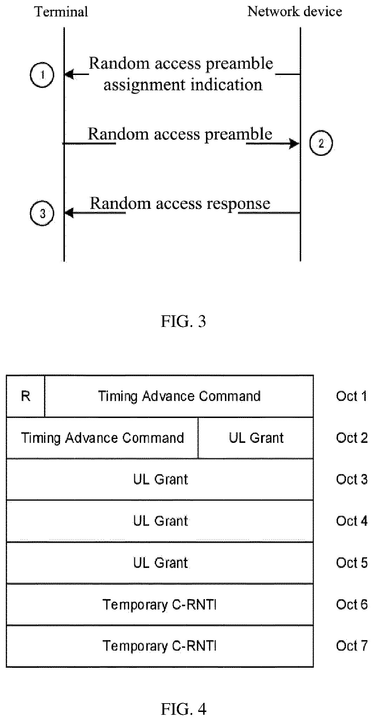

Exemplarily, FIG. 3 is a schematic diagram of an interaction flow of a non-contention-based random access manner, and the method specifically includes the following three steps:

Step 1, a network device sends a random access preamble assignment message (Random Access Preamble Assignment) to a terminal;

Step 2, the terminal sends a random access preamble (RA Preamble) to the network device; and

Step 3, the network device sends a random access response (RAR) to the terminal.

Exemplarily, FIG. 4 shows a schematic diagram of an RAR in the prior art. The RAR includes the following information: a timing advance command (Timing Advance Command, TAC), an uplink resource transmission grant (Uplink grant, UL grant), and a cell-radio network temporary identifier (Cell-Radio Network Temporary Identifier, C-RNTI). Besides, the RAR shown in FIG. 4 further includes a reserved bit R.

Information carried in the TAC may include a TA value. The UL grant can be used to indicate a time-frequency resource, a modulation and coding scheme (Modulation and coding scheme, MCS) format and a power control instruction for sending subsequent uplink signaling. The temporary C-RNTI is suitable for a contention-based random access process. In the scenario, the temporary C-RNTI is specifically used to provide a scrambling ID for the terminal to send Msg3 (a third message during the random access process), for resolving contention conflicts, which will not be described in detail herein.

In the RAR shown in FIG. 4, a TAC is included, and the TAC can indicate the TA. On this basis, when receiving the RAR, the terminal can obtain the TA value carried therein, and the terminal can use the TA value to adjust the clock per se to realize the clock synchronization with the network device.

However, the RAR shown in FIG. 4 does not indicate whether the terminal needs to adjust the clock per se. In some special time synchronization scenarios, it may lead to waste of processing resources of the terminal, and may even further aggravate the time non-synchronised status between the two based on the adjustment.

In an exemplary implementation scenario, a distance between the terminal and the network device is relatively short, and the transmission delay of signaling (or data) between the two is very small. In this case, the time non-synchronised status between the two is slight, so that the terminal does not need to adjust the clock per se in this case. When the terminal acquires the TA in the received RAR, the terminal uses the TA by default to adjust the local clock. In the implementation scenario, the adjustment of the terminal may not be necessary, and the time synchronization method occupies processing resources of the terminal to a certain extent.

In another exemplary implementation scenario, the network device acquires the TA value after receiving the random access preamble. In this case, if the time non-synchronised status between the terminal and the network device is relatively serious, the network device can also pre-compensate the transmission delay. After pre-compensation, the time non-synchronised status between the terminal and the network device is under control, and in this case, the terminal does not need to compensate the transmission delay. However, in the prior art, in response to the random access preamble, the network device sends the RAR to the terminal, and the RAR carries the TA value, so that the terminal still uses the TA value by default to compensate the transmission delay. In the scenario, the transmission delay is compensated twice (or more) during the time synchronization process, and it is likely to lead to excessive compensation, which may aggravate the time non-synchronised status.

In order to solve this problem, the embodiment provides a time adjustment method, which is described below in conjunction with specific embodiments.

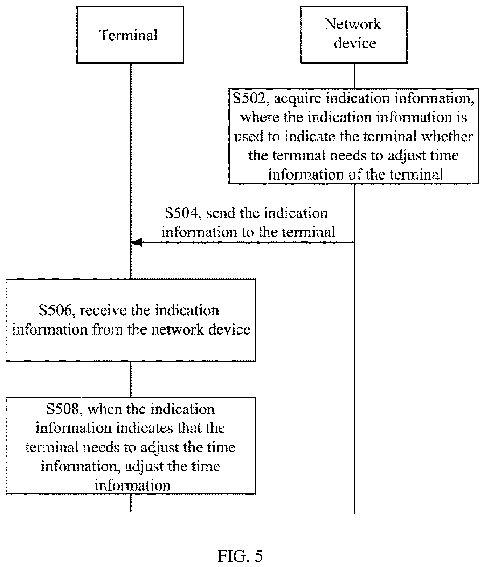

FIG. 5 shows a schematic diagram of an information interaction flow of a time adjustment method provided by an embodiment of the present application. As shown in FIG. 5, the method includes the following steps:

S502, a network device acquires indication information, where the indication information is used to indicate a terminal whether the terminal needs to adjust time information of the terminal;
S504, the network device sends the indication information to the terminal;
S506, the terminal receives the indication information from the network device; and
S508, when the indication information indicates that the terminal needs to adjust the time information, the terminal adjusts the time information.

In an embodiment of the present application, the network device and the terminal may be communication devices in the communication system as shown in FIG. 1, which will not be repeated herein.

In the embodiment shown in FIG. 5, the network device may indicate whether the terminal needs to adjust the time information of the temrinal, so as to alleviate the time non-synchronised status between the two.

In an embodiment of the present application, the random access process may be used to implement the time synchronization process between the network device and the terminal.

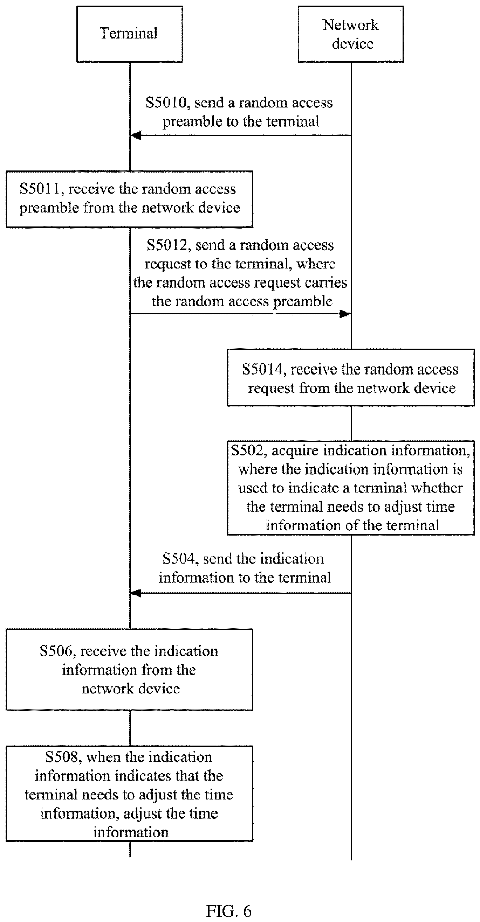

Optionally, the indication information acquired by the network device may be a random access response (RAR). FIG. 6 shows the time adjustment method. In addition to the foregoing S502 to S508, before S502, the method may further include the following steps:

S5012, the terminal sends a random access request to the network device, where the random access request carries the random access preamble; and
S5014, the network device receives the random access request from the terminal.

After receiving the random access request, the network device executes S502, and after confirming the random access request, the network device sends an RAR (that is, indication information) to the terminal.

In the embodiment shown in FIG. 6, the indication information may be sent based on the random access request (carrying a random access preamble) from the terminal. Further, the indication information may be sent based on the random access preamble from the terminal.

In an embodiment of the present application, the random access preamble is a contention-free random access preamble. The random access preamble can be used to request a TA from the network device.

During specific implementation, the random access preamble (denoted as a random access preamble 1) and the random access preamble (denoted as a random access preamble 2) in the embodiment shown in FIG. 3 in the prior art can be the same or different.

When the two are the same, the terminal can directly use the existing random access preamble 2 to initiate the random access process, thereby realizing the time synchronization with the network device.

When the two are different, the terminal can use the random access preamble 2 to initiate the random access process to realize the connection with the network device. In addition, the terminal can use the random access preamble 1 to initiate the random access process to realize the time synchronization with the network device. In the implementation scenario, the random access preamble carried in S5012 is the random access preamble 1.

For any of the foregoing implementation, the random access preamble used in S5012 may be configured by the network device for the terminal. In this case, before S5012, steps S5010 and S5011 may also be included:

S5010, the network device sends a random access preamble to the terminal; and
55011, the terminal receives the random access preamble from the network device.

It should be understood that the embodiment shown in FIG. 6 is a schematic situation, and S5010 and S5011 are executed before S5012. In an actual scenario, for a certain network device and terminal, S5010 and S5011 may be performed only once (or, twice when there are two random access preambles), and the terminal can store the received random access preamble for use in the subsequent random access process.

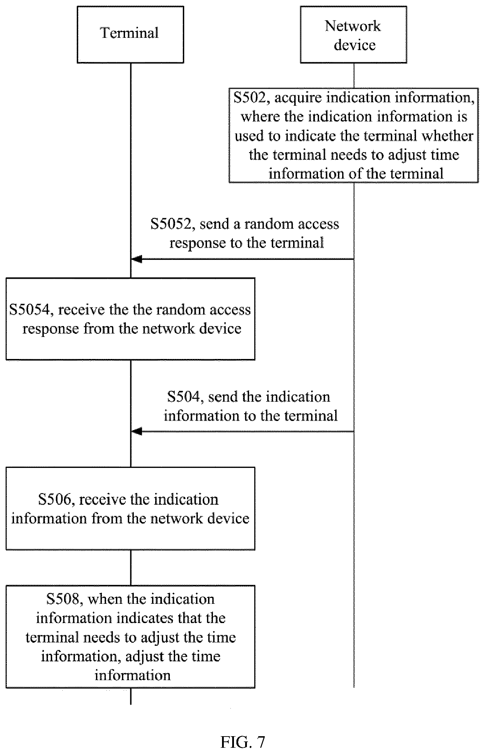

Optionally, the indication information acquired by the network device may be a piece of indication signaling different from the RAR. FIG. 7 shows the time adjustment method. In addition to the foregoing S502 to S508, the method may further include the following steps: S5052, the network device sends an RAR to the terminal.

In this case, a TAC is carried in the RAR. That is, a TA value is carried in the RAR.

S5054, the terminal receives the RAR from the network device.

Compared with the embodiment shown in FIG. 6, in the embodiment shown in FIG. 7, whether the terminal needs to adjust the clock per se is indicated through separately sent indication information. The embodiments of the present application do not specifically limit an order in which the indication information and the RAR are sent. The network device may send the RAR and the indication information at the same time, or may send them sequentially. As shown in FIG. 7, the RAR is sent first, and then the indication information is sent; or vice versa.

For the implementation of the steps shown in S5010 to S5014 in the embodiment shown in FIG. 7, reference can be made to FIG. 6, which will not be repeated here.

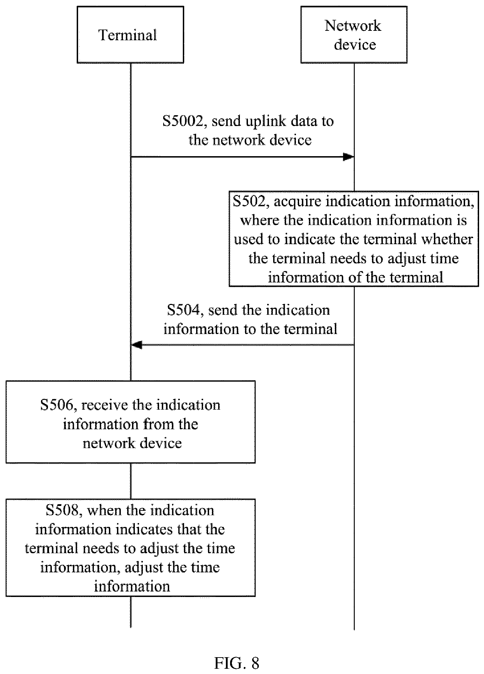

In addition to using the random access process to realize the time synchronization, the terminal can also realize the time synchronization by sending uplink data to the network device. That is to say, the indication information may be sent by the network device based on received uplink data. Exemplarily, FIG. 8 shows an interactive schematic diagram of the time adjustment method in this scenario. As shown in FIG. 8, before S502, the method further includes the following step: S5002, the terminal sends uplink data to the network device.

In the embodiment shown in FIG. 8 , the uplink data can be any uplink data. In this way, the terminal can realize the time synchronization in any process of sending the uplink data to the network device.

Besides, the uplink data in S5002 may also be specified uplink data, or the uplink data carries a specified identifier. Exemplarily, the uplink data sent in S5002 carries a random access preamble. Optionally, when there are multiple random access preambles, the random access preamble may be the random access preamble 2 mentioned in the foregoing embodiment, and the random access preamble 2 is used to request a TA from the network device. In the scenario, when the time synchronization is required, the terminal can add a specified identifier to the uplink data and send it to the network device.

Regarding the scenario where the indication information is an RAR, the method, in which the indication information indicates the terminal, is described in conjunction with a format of the RAR.

In an exemplary embodiment, when the indication information is an RAR, the indication function can be implemented by using an indication field included in the RAR. Specifically, when the indication field is a first identifier, the RAR indicates the terminal to adjust the time information; when the indication field is a second identifier, the RAR indicates that the terminal does not need to adjust the time information.

It should be understood that the first identifier is different from the second identifier. The forms of the first identifier and the second identifier can also be customized and preset according to an actual scenario, which can be one or a combination of numbers, letters, characters, and formulas. For example, the first identifier may be 1, and the second identifier may be 0; vice versa. For another example, the first identifier may be +, and the second identifier may be -; vice versa. For another example, the first identifier may be a0, and the second identifier may be al; or vice versa. For another example, the first identifier may indicate that the indication field is not null, and the second identifier may indicate that the field is null; or vice versa. This is not exhaustive.

In the embodiment of the present application, the location of the indication field may be specified according to actual needs.

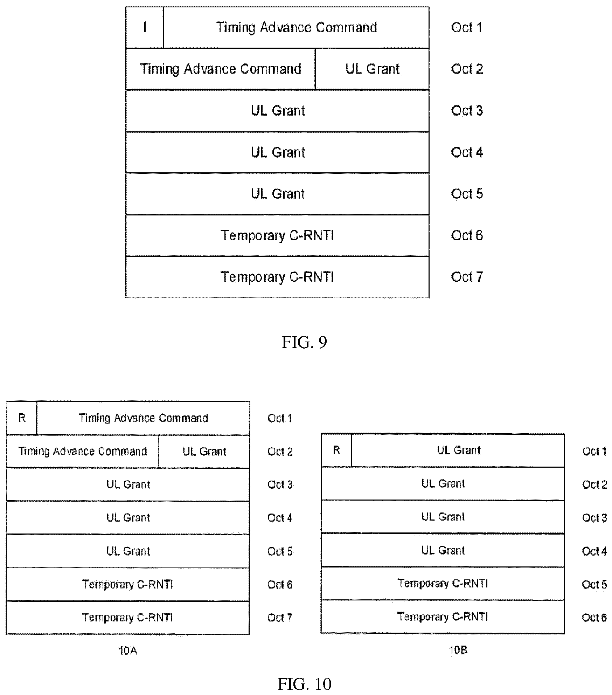

In a possible embodiment, a reserved bit R in the RAR can be used as the indication field. In this case, FIG. 9 shows a schematic diagram of the RAR. The RAR shown in FIG. 9 has the same structure as the RAR shown in FIG. 4. Only the reserved bit R in the RAR shown in FIG. 4 is used as a Field I (which is an exemplary representation, and is not intended to limit the scope of the solution) to indicate whether the terminal needs to adjust the clock per se. In this way, the present application utilizes the original reserved field in the RAR to identify the terminal (whether to adjust the clock per se), thereby not only meeting the requirement of indicating the terminal, but also directly implementing the time synchronization process through the RAR.

In an exemplary implementation, when the indication field I is 1, the RAR indicates that the terminal needs to adjust the clock per se; when the indication field I is 0, the RAR indicates that the terminal does not need to adjust the clock per se.

In another exemplary embodiment, when the indication information is an RAR, the indication function may be implemented by using whether the RAR includes a time adjustment parameter.

The time adjustment parameter involved in the embodiment of the present application may include, but is not limited to, one or more of: a TAC, location information of the terminal, and a distance between the terminal and the network device. During specific implementation, the network device may determine, based on the time adjustment parameter, whether the terminal needs to adjust the time information per se. Then, when indicating the terminal, the time adjustment parameter can also be used to implement the instruction function.

Exemplarily, the indication function may be implemented based on whether the time adjustment parameter is carried in the RAR. In other words, when the time adjustment reference information is carried in the RAR, the RAR indicates that the terminal needs to adjust the time information. Conversely, when the RAR does not carry the time adjustment reference information, the RAR indicates that the terminal does not need to adjust the time information.

Exemplarily, FIG. 10 shows two possible formats of the RAR during the implementation of the indication function. In FIG. 10, a TAC is used as the time adjustment parameter. In this case, the RAR shown in FIG. 10A has the same structure as the RAR shown in FIG. 4, including: a reserved bit, TACs, UL Grants and temporary C-RNTIs, which are used to indicate that the terminal needs to adjust the time information per se. The RAR shown in FIG. 10B is formed with a reserved bit R, UL Grants and temporary C-RNTIs, the RAR does not include a TAC, and the RAR is used to indicate that the terminal does not need to adjust the time information per se.

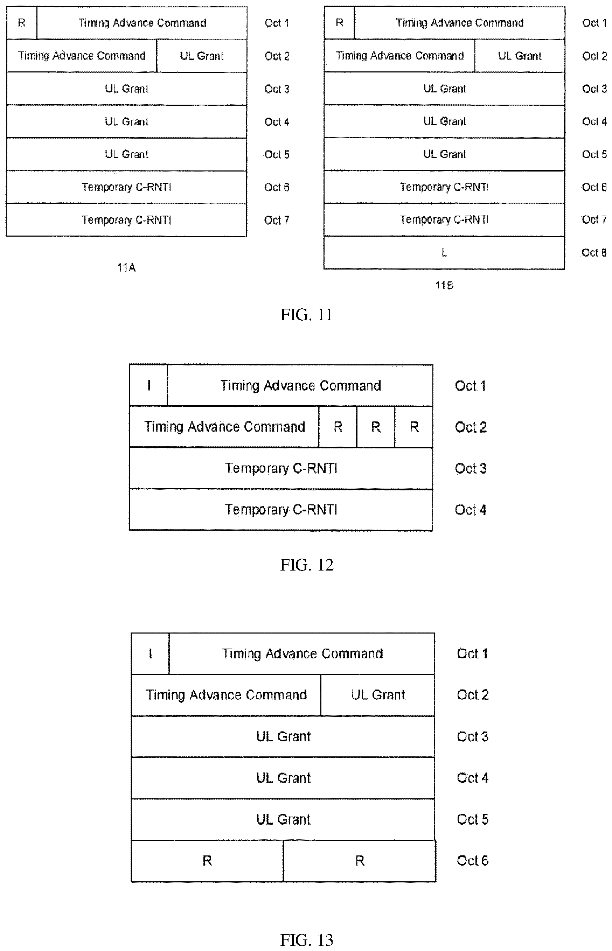

Exemplarily, FIG. 11 shows other two possible formats of the RAR during the indication function is implemented. The embodiment shown in FIG. 11 uses the distance between the terminal and the network device as the time adjustment reference information. The RAR shown in FIG. 11A has the same structure as the RAR shown in FIG. 4, including: a reserved bit R, TACs, UL Grants and temporary C-RNTIs. In this case, the RAR does not include the distance between the terminal and the network device, and the RAR is used to indicate that the terminal does not need to adjust the time information per se. On the basis of the structure shown in FIG. 11A, the RAR shown in FIG. 11B further includes the distance, denoted as L in FIG. 11B, to indicate that the terminal needs to adjust the time information per se.

In actual scenarios, the time adjustment parameter can be indicated by a newly added field. The RAR shown in FIG. 11B is only an exemplary situation, for example, the newly added field may be located before or after the TAC.

Alternatively, the time adjustment parameter may also be carried in one or more existing fields for indication. For example, the time adjustment parameter can be carried in the TAC. In this case, the TAC carries a location of the terminal (or a TA, or a distance), and the RAR is used to indicate that the terminal needs to adjust the time information per se; if the TAC does not carry the location of the terminal (or the TA, or the distance), the RAR is used to indicate that the terminal does not need to adjust the time information per se. For another example, if the reserved bit R carries the location of the terminal (or the TA, or the distance), the RAR is used to indicate that the terminal needs to adjust the time information per se; if the reserved bit R does not carry the location of the terminal (or the TA, or the distance), the RAR is used to indicate that the terminal does not need to adjust the time information per se.

When the indication function is implemented by using the time adjustment reference information, when the time adjustment reference information is numerical information, the indication function can be implemented by a numerical value of the time adjustment reference information.

In an exemplary situation, if the distance between the terminal and the network device is used as the time adjustment reference information, then the distance between the terminal and the network device can be carried in the reserved bit R, so that when the distance is greater than or equal to a preset distance threshold, the RAR is used to indicate that the terminal needs to adjust the time information per se; or, when the distance is less than the preset distance threshold, the RAR is used to indicate that the terminal does not need to adjust the time information per se.

In another exemplary situation, if the TAC (or the TA carried in the TAC) is used as the time adjustment reference information, then when the TA is greater than or equal to a preset advance threshold, the RAR is used to indicate that the terminal needs to adjust the time information per se; or, when the TA is less than the preset advance threshold, the RAR is used to indicate that the terminal does not need to adjust the time information per se.

In another exemplary situation, if the location of the terminal is used as the time to adjustment reference information, the content indicated by the RAR can be determined in the foregoing manner after the distance is calculated based on the location of the network device.

When the indication function is implemented by using the time adjustment reference information, the indication function may also be implemented based on a preset or preconfigured corresponding relationship.

In another exemplary case, an example is taken where the location of the terminal is the time adjustment reference information. For a certain network device, indication information of different geographical scopes can also be preset for the network device. For example, for an area A that is far away from the network device, the indication information can indicate that the terminal located in the area A needs to adjust the time information per se; and for an area B that is closer to the network device, the indication information can indicate that the terminal located in the B area does not need to adjust the time information per se. In this way, the indication function can be implemented based on the location information carried in the RAR.

In conclusion, in the embodiments of the present application, the time adjustment reference message may include, but is not limited to: a TA, a TAC, a distance between the terminal and the network device, and location where the terminal is located.

The embodiments of the present application are used to solve the time synchronization problem between the terminal and the network device, and the UL Grant and the temporary C-RNT have nothing to do with the realization of this function. Moreover, the UL Grant carried in the RAR occupies up to 27 bits, which also causes waste of downlink air interface resources and uplink time frequency resources to a certain extent. The temporary C-RNTI in the RAR occupies up to 16 bits, which will also cause waste of downlink air interface resources.

Optionally, in an embodiment of the present application, the RAR may include one or more of a UL Grant and a temporary C-RNTI. In other words, the RAR may include both the UL Grant and the temporary C-RNTI, as shown in FIG. 9 to FIG. 11. Besides, the RAR may also include only the UL Grant or the temporary C-RNTI. In this way, unnecessary fields in the RAR are deleted, which is beneficial to reduce the waste of uplink resources and downlink resources caused by these data.

Exemplarily, FIG. 12 shows a schematic diagram of another RAR format. As shown in FIG. 12, the RAR includes an indication field I, TACs, UL Grants and reserved bits R, where the reserved bits R are vacant transmission fields due to the fact that the temporary C-RNTIs are not transmitted.

Exemplarily, FIG. 13 shows a schematic diagram of another RAR format. As shown in FIG. 12, the RAR includes an indication field I, TACs, temporary C-RNTIs, and reserved bits R, where the reserved bits R are vacant transmission fields due to the fact that the UL Grants are not transmitted.

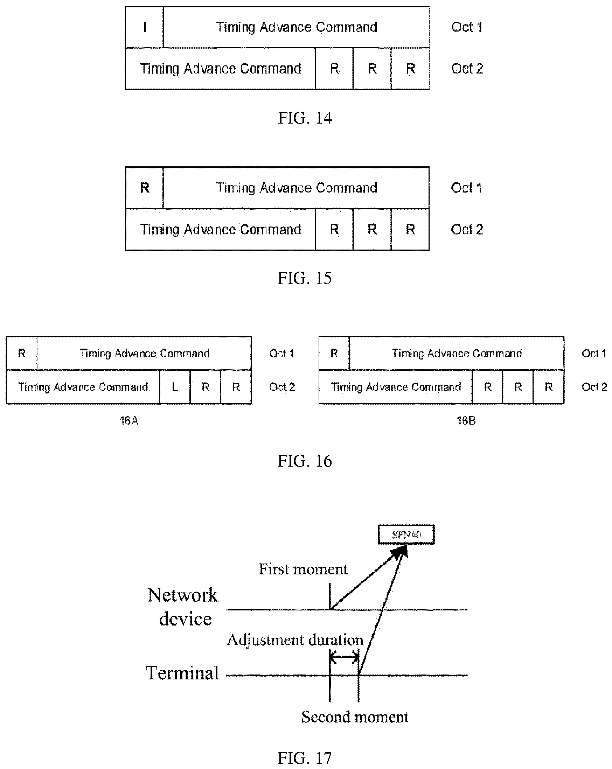

Optionally, when the RAR is used in a time synchronization scenario, the UL Grant and the temporary C-RNTI may not be included. Exemplarily, as shown in FIG. 14 , the RAR in this case includes an indication field I, TACs and reserved bits R, where the reserved bits R are vacant transmission fields due to the fact the UL Grants and the temporary C-RNTIs are not transmitted.

The aforementioned RARs shown in FIGS. 12 to 14 are described by taking an example where the RARs include the indication fields I. In actual scenarios, the indication function can also be implemented based on whether the RAR carries the time adjustment reference information.

Exemplarily, FIG. 15 shows another possible format of an RAR. In the embodiment, the indication function is implemented by whether the TAC carries the TA. In this case, the RAR includes TACs and reserved bits R.

Exemplarily, FIG. 16 shows another possible format of an RAR. In the embodiment shown in FIG. 16, the indication function is implemented based on whether the RAR carries the distance between the terminal and the network device. As shown in FIG. 16A , the RAR includes TACs, the distance L, and reserved bits R, where the distance L occupies one (or, more than one) reserved bits in the RAR (which reseverd bit is specifically occupied by the distance L can be preset or arbitrary, which is not limited herein). In this case, the RAR carries a time adjustment reference message, which is used to indicate that the terminal needs to adjust the time information per se. The RAR shown in FIG. 16B includes TACs and reserved bits R. In this case, if the RAR does not carry the distance which is the time adjustment reference information, the RAR is used to indicate that the terminal does not need to adjust the time information per se.

It should be understood that, in the foregoing embodiments, there may be different numbers of reserved bits R in the RAR, and the reserved bits R may be used to carry other information in the subsequent use process.

Optionally, when the network determines the indication information, based on different application scenarios, the network may adopt RARs in different formats to respond to the random access request.

For example, when the network device receives the random access request from the terminal, if the random access request carries the random access preamble 1, the network device can send the random access request in any one of the formats shown in FIGS. 9 to 14 or the variants thereof to the terminal, the RAR has an indication function, and is used to indicate whether the terminal needs to adjust the time information per se. In this way, the time synchronization between the terminal and the network device can be realized. Alternatively, if the random access request received by the network device carries the random access preamble 2, the network device may send the RAR in the format shown in FIG. 4 to the terminal to implement the random access between the terminal and the network device.

In the embodiment of the present application, the network device needs to acquire the indication information and send the indication information to the terminal. During specific implementation, the network device can acquire time non-synchronised status between the terminal and the network device, so that when the time non-synchronised status exceeds a preset non-synchronised condition, the indication information indicates that the terminal needs to adjust the time information. Conversely, when the time non-synchronised status does not exceed the preset non-synchronised condition, the indication information indicates that the terminal does not need to adjust the time information.

The network device may determine whether the time non-synchronised status exceeds the preset non-synchronised condition based on a difference between a sending moment and a receiving moment of uplink data or a random access request (or a random request preamble).

In an exemplary embodiment, when executing S502, the network device may acquire a sending moment of target information from the terminal. Therefore, when an absolute value of a difference between the sending moment and a receiving moment is greater than or equal to a preset time difference threshold, determine that the time non-synchronised status exceeds the preset non-synchronised condition. The receiving moment is a moment when the network device receives the target information.

In the embodiment, if the time synchronization method is implemented in the manner shown in FIG. 6 , the target information may be a random access preamble, or may be a random access request carrying a random access preamble. If the time synchronization method is implemented in the manner shown in FIG. 7, the target information may be uplink data from the terminal.

In addition, in another exemplary embodiment, the network device may also acquire a distance between the network device and the terminal. Then, when the distance is greater than or equal to a preset distance threshold, it can be determined that the time non-synchronised status exceeds the preset non-synchronised condition. Conversely, when the distance is less than the preset distance threshold, it is determined that the time non-synchronised status does not exceed the preset non-synchronised condition.

In addition, in another possible embodiment, the network device may also acquire location of the terminal. Then, when the preset indication manner of the area where the terminal is located is that adjustment is required, it is determined that the time non-synchronised status exceeds the preset non-synchronised condition. Conversely, if the preset indication manner of the area where the terminal is located is that no adjustment is required, it is determined that the time non-synchronised status does not exceed the preset non-synchronised condition.

In the foregoing embodiment, if the difference between the sending moment and the receiving moment of the target information is relatively large, or if the distance between the terminal and the network device is relatively long, the time non-synchronised status between the terminal and the network device is relatively large (or relatively serious), and exceeds the preset non-synchronised condition, the terminal can be indicated to adjust the time information per se.

Alternatively, when it is determined based on any of the foregoing embodiments that the time non-synchronised status between the terminal and the network device exceeds the preset non-synchronised condition, it is also possible to pre-compensate the time information of the terminal. When the pre-compensation is completed, the indication information indicates that the terminal does not need to adjust the time information.

Based on the foregoing processing, the network device acquires the indication information and sends the indication information to the terminal. After the terminal receives the indication information, if the indication information indicates that the terminal needs to adjust the time information per se, the terminal can use the time adjustment information to adjust the time information. The time adjustment information involved in the embodiment of the present application may include, but is not limited to, a timing advance (TA).

Exemplarily, refer to FIG. 17, when using the time adjustment information to adjust the time information, the terminal can acquire an adjustment duration (denoted as delta_t) associated with the time adjustment information, so that when a local clock reaches a first moment, the terminal adjusts the local clock to a second moment. As shown in FIG. 17, a time interval between the second moment and the first moment is the adjustment duration.

In the embodiment of the present application, the first moment may be a moment corresponding to a frame boundary of a reference frame specified by the network device. In the embodiment, the reference frame is specified by the network device, and the network device may spesify any frame after the current moment as the reference frame. In this case, the network device may carry identification information of the reference frame in the foregoing indication information, or may also send the identification information of the reference frame separately, or may also carry the identification information of the reference frame in the RAR. The identification information of the reference frame is used to identify the reference frame, and the identification information may include, but is not limited to, a frame number or any moment in the frame (for example, a start moment of the frame or an end moment of the frame).

In another embodiment, the first moment is a moment corresponding to a frame boundary of a frame to which the indication information belongs, or a frame to which a information block, which the indication information belongs to, belongs. In this case, the specific indication manner of the first moment may be preconfigured in the terminal in advance, and there is no need for the network device to indicate this manner additionally.

For example, if the terminal receives the RAR, it can acquire the adjustment duration delta_t corresponding to the TA carried in the RAR, and the adjustment duration delta_t is assumed to be 10 nanoseconds. The terminal can acquire the moment corresponding to the frame boundary of the reference frame indicated by the network device to be: 0 minute, 0 second, 0 millisecond, 0 microsecond, and 10 nanoseconds past nine. When the indication information indicates that the terminal needs to adjust the time information per se, the terminal can adjust, when the local clock reaches 0 minute, 0 second, 0 millisecond, 0 microsecond, and 10 nanoseconds past nine, the local clock to 0 minute, 0 second, 0 millisecond, 0 microsecond, and 10 nanoseconds past nine + delta_t, that is, adjust the local clock to 0 minute, 0 second, 0 millisecond, 0 microsecond, and 20 nanoseconds past nine.

In this embodiment of the present application, the terminal may use a time alignment timer (Time Alignment Timer, TAT) to time an effective period of the TA. In this way, the TAT can be started or stopped during the time synchronization process, and the time synchronization process can also be triggered based on the activation and deactivation of the TAT.

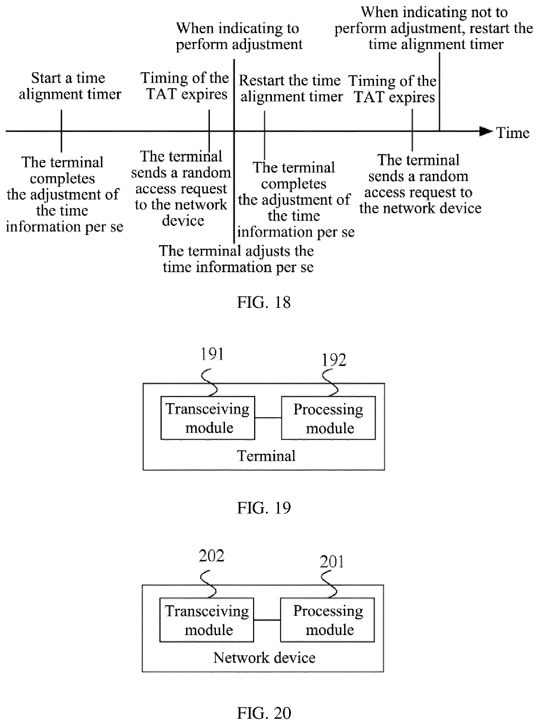

Exemplarily, FIG. 18 shows a schematic diagram of a relationship between the TAT and the time adjustment method. As shown in FIG. 18, in the embodiment of the present application, when completing the adjustment of the time information per se, the terminal can start the TAT (or restart the TAT). The TAT starts timing.

After that, when timing of the TAT expires, the TA value expires, so that the network device can be requested for the latest TA in the manner shown in FIG. 6 or FIG. 7. Taking the embodiment shown in FIG. 6 as an example, in the scenario, when the timing of the TAT expires, the terminal executes S5012 and the subsequent steps. That is, the terminal sends the random access request to the network device, and executes the subsequent steps in FIG. 6, in this case, if the indication information indicates that the terminal needs to adjust the time information per se, the terminal restarts the TAT after completing the adjustment. Alternatively, as shown in FIG. 18, if the indication information indicates that the terminal does not need to adjust the time information per se, the terminal may directly restart the TAT.

In addition, in the embodiment of the present application, the TAT may be suspended before the timing duration of the TAT is reached. Exemplarily, when uplink data transmission, tracking area update, or beam failure recovery is performed by the terminal, the TAT may be suspended. When these actions for triggering the suspension occurs, if the terminal can obtain the latest TA, the terminal can directly restart the TAT according to the latest TA. For example, if the terminal sends the uplink data to the network device to cause the TAT to be suspended, after receiving the latest TA from the network device, the terminal can determine when to restart the TAT according to the indication information.

FIG. 19 is a schematic structural diagram of a terminal provided by the application. As shown in FIG. 19, the terminal includes: a transceiving module 191 and a processing module 192; where the transceiving module 191 is configured to receive indication information from a network device; where the indication information is used to indicate whether the terminal needs to adjust time information of the terminal; the processing module 192 is configured to adjust the time information when the indication information indicates that the terminal needs to adjust the time information.

The terminal provided in the embodiment is configured to execute the technical solutions on the terminal side according to any of the foregoing method embodiments, and the implementation principle and technical effect thereof are similar, which will not be repeated here.

On the basis of the above-mentioned embodiment shown in FIG. 17, optionally, the indication information is a random access response (RAR), and the RAR includes an indication field; when the indication field is a first identifier, the RAR indicates that the terminal needs to adjust the time information; when the indication field is a second identifier, the RAR indicates that the terminal does not need to adjust the time information.

Optionally, the indication information is an RAR; when the RAR carries the time adjustment reference information, the RAR indicates that the terminal needs to adjust the time information; when the RAR does not carry the time adjustment reference information, the RAR indicates that the terminal does not need to adjust the time information.

Optionally, the time adjustment reference information comprises one or more of timing advance command (TAC), location information of the terminal, and a distance between the terminal and the network device.

Optionally, the RAR further includes: one or more of uplink grant information and a temporary cell-radio network temporary identifier.

Optionally, the indication information is sent by the network device based on a random access request received from the terminal; and the transceiving module 191 is further configured to: send the random access request to the network device.

Optionally, the random access request carries a contention-free random access preamble, and the random access preamble is used to request a TA from the network device; and the transceiving module 191 is further configured to: receive the random access preamble from the network device.

Optionally, the transceiving module 191 is specifically configured to: when timing of a time alignment timer (TAT) expires, send the random access request to the network device; where the time alignment timer is configured to time an effective period of a TA.

Optionally, the indication information is sent by the network device based on received uplink data; the transceiving module 191 is further configured to: send the uplink data to the network device.

Optionally, the processing module 192 is specifically configured to: adjust the time information by using time adjustment information; where the time adjustment information includes: a timing advance (TA).

Optionally, the processing module 192 is specifically configured to: acquire an adjustment duration, where the adjustment duration is associated with the time adjustment information; and when a local clock reaches a first moment, adjust the local clock to a second moment, where a time interval between the second moment and the first moment is the adjustment duration.

Optionally, the first moment is a moment corresponding to a frame boundary of a reference frame specified by the network device; or, the first moment is a moment corresponding to a frame boundary of a frame to which the indication information belongs, or a frame to which a information block, which the indication information belongs to, belongs.

Optionally, the TA is carried in the indication information.

Optionally, the processing module 192 is further configured to: when adjustment for time information is completed, restart a time alignment timer.

Optionally, the processing module 192 is further configured to: when the indication information is used to indicate that the terminal does not need to adjust a TA, restart a time alignment timer.

FIG. 20 is a schematic structural diagram of a network device provided by the present application. As shown in FIG. 20, the network device 200 includes: a processing module 201 and a transceiving module 202; where the processing module 201 is configured to acquire indication information, where the indication information is used to indicate a terminal whether the terminal needs to adjust time information of the terminal; the transceiving module 202 is configured to send the indication information to the terminal, to enable the terminal to adjust the time information when the indication information indicates that the terminal needs to adjust the time information.

The network device provided in the embodiment is configured to execute the technical solutions on the network device side according to any of the foregoing method embodiments, and the implementation principle and technical effect thereof are similar, which will not be repeated here.

Optionally, the indication information is a random access response (RAR), and the RAR includes an indication field; when the indication field is a first identifier, the RAR indicates that the terminal needs to adjust the time information; when the indication field is a second identifier, the RAR indicates that the terminal does not need to adjust the time information.

Optionally, the indication information is an RAR; when the RAR carries the time adjustment reference information, the RAR indicates that the terminal needs to adjust the time information; when the RAR does not carry the time adjustment reference information, the RAR indicates that the terminal does not need to adjust the time information.

Optionally, the time adjustment reference information comprises one or more of timing advance command (TAC), location information of the terminal, and a distance between the terminal and the network device.

Optionally, the RAR further includes: one or more of uplink grant information and a temporary cell-radio network temporary identifier.

Optionally, the indication information is sent by the network device based on a random access request received from the terminal; and the transceiving module 202 is further configured to: receive the random access request from the terminal.

Optionally, the random access request carries a contention-free random access preamble, and the random access preamble is used to request a TA from the network device; and the transceiving module 202 is further configured to: send the contention-free random access preamble to the terminal.

Optionally, the random access request is sent by the terminal to the network device when timing of a time alignment timer (TAT) expires, where the time alignment timer is configured to time an effective period of a TA.

Optionally, the indication information is sent by the network device based on received uplink data; the transceiving module 202 is further configured to: receive the uplink data from the terminal.

Optionally, the processing module 201 is specifically configured to: acquire time non-synchronised status between the terminal and the network device; where when the time non-synchronised status exceeds a preset non-synchronised condition, the indication information indicates that the terminal needs to adjust the time information.

Optionally, the processing module 201 is specifically configured to: acquire a sending moment of target information from the terminal, where the target information is uplink data or a random access request preamble; when an absolute value of a difference between the sending moment and a receiving moment is greater than or equal to a preset time difference threshold, determine that the time non-synchronised status exceeds the preset non-synchronised condition; where the receiving moment is a moment when the network device receives the target information.

Optionally, the processing module 201 is specifically configured to: acquire a distance between the network device and the terminal; and when the distance is greater than or equal to a preset distance threshold, determine that the time non-synchronised status exceeds the preset non-synchronised condition.

Optionally, the processing module 201 is further specifically configured to: when time non-synchronization occurs between the terminal and the network device, pre-compensate the time information of the terminal; where when the pre-compensation is completed, the indication information indicates that the terminal does not need to adjust the time information.

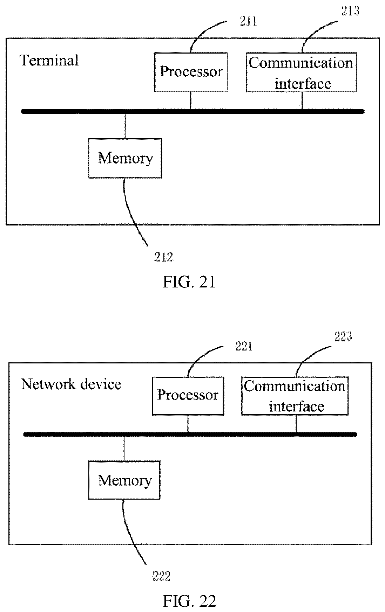

FIG. 21 is another schematic structural diagram of the terminal provided by the present application. As shown in FIG. 21, the terminal 210 includes:

a processor 211, a memory 212, a communication interface 213;
the memory 212 stores a computer-executable instruction;
the processor 211 executes the computer-executed instruction stored in the memory 212, so that the processor 211 executes the technical solutions on the terminal side in any of the foregoing method embodiments.

FIG. 21 is a simple design of a terminal. The embodiment of the present application does not limit the number of the processors and the memories in the terminal. FIG. 21 simply takes 1 as an example for description.

FIG. 22 is another schematic structural diagram of a network device provided by the present application. As shown in FIG. 22, the network device 220 includes:

a processor 221, a memory 222, a communication interface 223;
the memory 222 stores a computer-executable instruction;

the processor 221 executes the computer-executed instruction stored in the memory 222, so that the processor 221 executes the technical solutions on the network device side in any of the foregoing method embodiments.

FIG. 22 is a simple design of a network device. The embodiment of the present application does not limit the number of the processor and the memory in the network device. FIG. 22 simply takes 1 as an example for description.

In a specific implementation of the terminal shown in FIG. 21 and the network device shown in FIG. 22, the memory, the processor, and the communication interface may be connected through a bus, and optionally, the memory may be integrated inside the processor.

An embodiment of the present application further provides a communication system. As shown in FIG. 1, the communication system 100 may include a terminal and a network device, where the terminal is configured to execute the technical solutions on the terminal side in any of the foregoing method embodiments; the network device is configured to execute the technical solutions on the network device side in any of the foregoing method embodiments.

An embodiment of the present application further provides a computer-readable storage medium, where the computer-readable storage medium has a computer-executable instruction stored thereon, and when the computer-executable instruction is executed by a processor, the computer-readable storage medium is configured to implement the time adjustment method in any of the foregoing method embodiments.

An embodiment of the present application further provides a chip, including: a processor, configured to call and run a computer program from a memory, so that a device installed with the chip executes the time adjustment method in any of the foregoing method embodiments.

An embodiment of the present application further provides a computer program product, including computer program instructions that cause a computer to execute the time adjustment method in any of the foregoing method embodiments.

An embodiment of the present application further provides a computer program, the computer program causes a computer to execute the time adjustment method in any of the foregoing method embodiments.

In the several embodiments provided in the present application, it should be understood that the disclosed devices and methods may be implemented in other manners. For example, the device embodiments described above are merely illustrative. For example, the division of the modules is only a logical function division. In an actual implementation, there may be another division manners. For example, multiple modules may be combined or may be integrated into another system, or some features may be ignored or not executed. In addition, a coupling or direct coupling or communication connection shown or discussed may be an indirect coupling or communication connection through some interfaces, apparatuses or units, and may be in electrical, mechanical or other forms.

In the specific implementation of the above-mentioned terminal and network device, it should be understood that the processor may be a central processing unit (Central Processing Unit, CPU for short), or other general processors, a digital signal processor (Digital Signal Processor, DSP for short), an application specific integrated circuit (Application Specific Integrated Circuit, ASIC for short) and so on. The general processor may be a microprocessor, or the processor may be any conventional processors or the like. The steps of the method disclosed in the embodiments of the present application may be directly executed by a hardware processor, or by a combination of hardware and software modules in the processor.

All or part of the steps for implementing the above method embodiments may be completed via the hardware related to program instructions. The aforementioned programs can be stored in a readable memory. When the programs are executed, the steps including the above method embodiments are executed; and the aforementioned memory (storage medium) includes: a read-only memory (Read-Only Memory, ROM for short), an RAM, a flash memory, a hard disk, a solid state disk, a magnetic tape, a floppy disk, an optical disk and any combination thereof.

## Claims

1. A time adjustment method, comprising:

   receiving indication information from a network device, wherein the indication information is used to indicate whether a terminal needs to adjust time information of the terminal; and
   when the indication information indicates that the terminal needs to adjust the time information, adjusting the time information.

2. The method according to claim 1, wherein the indication information is a random access response RAR, and the RAR comprises an indication field;

   when the indication field is a first identifier, the RAR indicates that the terminal needs to adjust the time information;
   when the indication field is a second identifier, the RAR indicates that the terminal does not need to adjust the time information.

3. The method according to claim 1, wherein the indication information is an RAR;

when the RAR carries time adjustment reference information, the RAR indicates that the terminal needs to adjust the time information;
when the RAR does not carry the time adjustment reference information, the RAR indicates that the terminal does not need to adjust the time information.

4. The method according to claim 3, wherein the time adjustment reference information comprises one or more of a timing advance command TAC, location information of the terminal, and a distance between the terminal and the network device.

5. The method according to any one of claims 2 to 4, wherein the RAR further comprises: one or more of uplink grant information and a temporary cell-radio network temporary identifier.

6. The method according to any one of claims 2 to 4, wherein the indication information is sent by the network device based on a random access request received from the terminal; and the method further comprises:
sending the random access request to the network device.

7. The method according to claim 6, wherein the random access request carries a contention-free random access preamble, and the random access preamble is used to request a timing advance TA from the network device; and the method further comprises:
receiving the random access preamble from the network device.

8. The method according to claim 6, wherein the sending the random access request to the network device comprises:

when timing of a time alignment timer TAT expires, sending the random access request to the network device;
wherein the time alignment timer is configured to time an effective period of a TA.

9. The method according to claim 1, wherein the indication information is sent by the network device based on received uplink data; and the method further comprises:
sending the uplink data to the network device.

10. The method according to claim 1, wherein the adjusting the time information comprises:

adjusting the time information by using time adjustment information;
wherein the time adjustment information comprises: a timing advance TA.

11. The method according to claim 10, wherein the adjusting the time information by using the time adjustment information comprises:

acquiring an adjustment duration, wherein the adjustment duration is associated with the time adjustment information; and
when a local clock reaches a first moment, adjusting the local clock to a second moment, wherein a time interval between the second moment and the first moment is the adjustment duration.

12. The method according to claim 11, wherein the first moment is a moment corresponding to a frame boundary of a reference frame specified by the network device; or, the first moment is a moment corresponding to a frame boundary of a frame to which the indication information belongs, or a frame to which a information block, which the indication information belongs to, belongs.

13. The method according to claim 10, wherein the TA is carried in the indication information.

14. The method according to any one of claims 1 to 4, 10 to 13, wherein the method further comprises:
when adjustment for the time information is completed, restarting a time alignment timer.

15. The method according to any one of claims 1 to 4, 10 to 13, wherein the method further comprises:
when the indication information is used to indicate that the terminal does not need to adjust a TA, restarting a time alignment timer.

16. A time adjustment method, comprising:

acquiring indication information, wherein the indication information is used to indicate a terminal whether the terminal needs to adjust time information of the terminal;
sending the indication information to the terminal, to enable the terminal to adjust the time information when the indication information indicates that the terminal needs to adjust the time information.

17. The method according to claim 16, wherein the indication information is a random access response RAR, and the RAR comprises an indication field;

when the indication field is a first identifier, the RAR indicates that the terminal needs to adjust the time information;
when the indication field is a second identifier, the RAR indicates that the terminal does not need to adjust the time information.

18. The method according to claim 16, wherein the indication information is an RAR;

when the RAR carries time adjustment reference information, the RAR indicates that the terminal needs to adjust the time information; when the RAR does not carry the time adjustment reference information, the RAR indicates that the terminal does not need to adjust the time information.

19. The method according to claim 18, wherein the time adjustment reference information comprises one or more of a timing advance command TAC, location information of the terminal, and a distance between the terminal and a network device.

20. The method according to any one of claims 17 to 19, wherein the RAR further comprises: one or more of uplink grant information and a temporary cell-radio network temporary identifier.

21. The method according to any one of claims 17 to 19, wherein the indication information is sent by a network device based on a received random access request; and the method further comprises: receiving the random access request from the terminal.

22. The method according to claim 21, wherein the random access request carries a contention-free random access preamble, and the random access preamble is used to request a timing advance TA from the network device; and the method further comprises: sending the contention-free random access preamble to the terminal.

23. The method according to claim 21, wherein the random access request is sent by the terminal to the network device when timing of a time alignment timer TAT expires; wherein the time alignment timer is configured to time an effective period of a TA.

24. The method according to any one of claims 16 to 19, wherein the indication information is sent by a network device based on received uplink data; and the method further comprises: receiving the uplink data from the terminal.

25. The method according to any one of claims 16 to 19, wherein the acquiring the indication information comprises:

acquiring time non-synchronised status between the terminal and the network device; when the time non-synchronised status exceeds a preset non-synchronised condition, the indication information indicates that the terminal needs to adjust the time information.

26. The method according to claim 25, wherein the acquiring the time non-synchronised status between the terminal and the network device further comprises:

acquiring a sending moment of target information from the terminal, wherein the target information is uplink data or a random access request preamble; when an absolute value of a difference between the sending moment and a receiving moment is greater than or equal to a preset time difference threshold, determining that the time non-synchronised status exceeds the preset non-synchronised condition; wherein the receiving moment is a moment when the network device receives the target information.

27. The method according to claim 25, wherein the acquiring the time non-synchronised situation between the terminal and the network device further comprises:

acquiring a distance between the network device and the terminal; and when the distance is greater than or equal to a preset distance threshold, determining that the time non-synchronised status exceeds the preset non-synchronised condition.

28. The method according to claim 25, wherein the acquiring the indication information further comprises:

when time non-synchronization occurs between the terminal and the network device, pre-compensating the time information of the terminal; wherein when the pre-compensation is completed, the indication information indicates that the terminal does not need to adjust the time information.

29. A terminal, comprising:

a transceiving module, configured to receive indication information from a network device, wherein the indication information is used to indicate whether the terminal needs to adjust time information of the terminal; a processing module, configured to adjust the time information when the indication information indicates that the terminal needs to adjust the time information.

**30.** The terminal according to claim 29, wherein the indication information is a random access response RAR, and the RAR comprises an indication field;

when the indication field is a first identifier, the RAR indicates that the terminal needs to adjust the time information;
when the indication field is a second identifier, the RAR indicates that the terminal does not need to adjust the time information.

**31.** The terminal according to claim 29, wherein the indication information is an RAR;

when the RAR carries time adjustment reference information, the RAR indicates that the terminal needs to adjust the time information;
when the RAR does not carry the time adjustment reference information, the RAR indicates that the terminal does not need to adjust the time information.

**32.** The terminal according to claim 31, wherein the time adjustment reference information comprises one or more of a timing advance command TAC, location information of the terminal, and a distance between the terminal and the network device.

**33.** The terminal according to any one of claims 30 to 32, wherein the RAR further comprises: one or more of uplink grant information and a temporary cell-radio network temporary identifier.

**34.** The terminal according to any one of claims 30 to 32, wherein the indication information is sent by the network device based on a random access request received from the terminal; and the transceiving module is further configured to:
send the random access request to the network device.

**35.** The terminal according to claim 34, wherein the random access request carries a contention-free random access preamble, and the random access preamble is used to request a timing advance TA from the network device; and the transceiving module is further configured to:
receive the random access preamble from the network device.

**36.** The terminal according to claim 34, wherein the transceiving module is specifically configured to:

when timing of a time alignment timer TAT expires, send the random access request to the network device;
wherein the time alignment timer is configured to time an effective period of a TA.

**37.** The terminal according to claim 29, wherein the indication information is sent by the network device based on received uplink data; and the transceiving module is further configured to:
send the uplink data to the network device.

**38.** The terminal according to claim 29, wherein the processing module is specifically configured to:

adjust the time information by using time adjustment information;
wherein the time adjustment information comprises: a timing advance TA.

**39.** The terminal according to claim 38, wherein the processing module is specifically configured to:

acquire an adjustment duration, wherein the adjustment duration is associated with the time adjustment information; and
when a local clock reaches a first moment, adjust the local clock to a second moment, wherein a time interval between the second moment and the first moment is the adjustment duration.

**40.** The terminal according to claim 39, wherein the first moment is a moment corresponding to a frame boundary of a reference frame specified by the network device; or, the first moment is a moment corresponding to a frame boundary of a frame to which the indication information belongs, or a frame to which a information block, which the indication information belongs to, belongs.

**41.** The terminal according to claim 38, wherein the TA is carried in the indication information.

**42.** The terminal according to claim 29 to 32, 38 to 41, wherein the processing module is further configured to:
when adjustment for the time information is completed, restart a time alignment timer.

**43.** The terminal according to claim 29 to 32, 38 to 41, wherein the processing module is further configured to:
when the indication information is used to indicate that the terminal does not need to adjust a TA, restart a time alignment timer.

**44.** A network device, comprising:

a processing module, configured to acquire indication information, wherein the indication information is used to indicate a terminal whether the terminal needs to adjust time information of the terminal; and

a transceiving module, configured to send the indication information to the terminal, to enable the terminal to adjust the time information when the indication information indicates that the terminal needs to adjust the time information.

45. The network device according to claim 44, wherein the indication information is a random access response RAR, and the RAR comprises an indication field;

when the indication field is a first identifier, the RAR indicates that the terminal needs to adjust the time information;
when the indication field is a second identifier, the RAR indicates that the terminal does not need to adjust the time information.

46. The network device according to claim 44, wherein the indication information is an RAR;

when the RAR carries time adjustment reference information, the RAR indicates that the terminal needs to adjust the time information;
when the RAR does not carry the time adjustment reference information, the RAR indicates that the terminal does not need to adjust the time information.

47. The network device according to claim 46, wherein the time adjustment reference information comprises one or more of a timing advance command TAC, location information of the terminal, and a distance between the terminal and the network device.

48. The network device according to any one of claims 45 to 47, wherein the RAR further comprises: one or more of uplink grant information and a temporary cell-radio network temporary identifier.

49. The network device according to any one of claims 45 to 47, wherein the indication information is sent by the network device based on a received random access request; and the transceiving module is further configured to:
receive the random access request from the terminal.

50. The network device according to claim 49, wherein the random access request carries a contention-free random access preamble, and the random access preamble is used to request a timing advance TA from the network device; and the transceiving module is further configured to:
send the contention-free random access preamble to the terminal.

51. The network device according to claim 49, wherein the random access request is sent by the terminal to the network device when timing of a time alignment timer TAT expires;
wherein the time alignment timer is configured to time an effective period of a TA.

52. The network device according to any one of claims 44 to 47, wherein the indication information is sent by the network device based on received uplink data; and the transceiving module is further configured to:
receive the uplink data from the terminal.

53. The network device according to any one of claims 44 to 47, wherein the processing module is specifically configured to:

acquire time non-synchronised status between the terminal and the network device;
wherein when the time non-synchronised status exceeds a preset non-synchronised condition, the indication information indicates that the terminal needs to adjust the time information.

54. The network device according to claim 53, wherein the processing module is specifically configured to:

acquire a sending moment of target information from the terminal, wherein the target information is uplink data or a random access request preamble;
when an absolute value of a difference between the sending moment and a receiving moment is greater than or equal to a preset time difference threshold, determine that the time non-synchronised status exceeds the preset non-synchronised condition;
wherein the receiving moment is a moment when the network device receives the target information.

55. The network device according to claim 53, wherein the processing module is specifically configured to:

acquire a distance between the network device and the terminal; and
when the distance is greater than or equal to a preset distance threshold, determine that the time non-synchronised status exceeds the preset non-synchronised condition.

56. The network device according to claim 53, wherein the processing module is further specifically configured to:

when time non-synchronization occurs between the terminal and the network device, pre-compensate the time information of the terminal; wherein when the pre-compensation is completed, the indication information indicates that the terminal does not need to adjust the time information.

57. A terminal, comprising:

a processor, a memory, a communication interface;
the memory stores a computer-executable instruction;
the processor executes the computer-executable instruction stored in the memory, so that the processor executes the method according to any one of claims 1 to 15.

58. A network device, comprising:

a processor, a memory, a communication interface;
the memory stores a computer-executable instruction;
the processor executes the computer-executable instruction stored in the memory, so that the processor executes the method of any of claims 16 to 28.

59. A communication system, comprising:

a terminal, configured to execute the method according to any one of claims 1 to 15; and
a network device, configured to execute the method according to any one of claims 16 to 28.

60. A computer-readable storage medium, wherein the computer-readable storage medium has a computer-executable instruction stored thereon, and when the computer-executable instruction is executed by a processor, the computer-readable storage medium is configured to execute the method according to any one of claims 1 to 28.

61. A chip, comprising: a processor, configured to call and run a computer program from a memory, so that a device installed with the chip executes the method according to any one of claims 1 to 28.

62. A computer program product, comprising computer program instructions that cause a computer to execute the method according to any one of claims 1 to 28.

**100**

FIG. 1

| Time sensitive network node 2 | 5G system edge adapter 2 | 5G system edge adapter 1 | Time sensitive network node 1 |
|---|---|---|---|

1: Clock synchronization signaling

2: Clock synchronization signaling (carrying a first timestamp)

3: Clock synchronization signaling (carrying a first timestamp and a second timestamp)

FIG. 2

Terminal                                    Network device

FIG. 3

| | | |
|---|---|---|
| R | Timing Advance Command | Oct 1 |
| Timing Advance Command | UL Grant | Oct 2 |
| UL Grant | | Oct 3 |
| UL Grant | | Oct 4 |
| UL Grant | | Oct 5 |
| Temporary C-RNTI | | Oct 6 |
| Temporary C-RNTI | | Oct 7 |

FIG. 4

FIG. 5

```
┌──────────┐                              ┌──────────┐
│ Terminal │                              │ Network  │
│          │                              │ device   │
└────┬─────┘                              └────┬─────┘
     │                                         │
     │    S5010, send a random access          │
     │        preamble to the terminal         │
     │ ◄───────────────────────────────────────│
     │                                         │
┌────┴──────────────────────────┐              │
│ S5011, receive the random      │             │
│ access preamble from the       │             │
│ network device                 │             │
└────┬───────────────────────────┘             │
     │                                         │
     │    S5012, send a random access          │
     │    request to the terminal, where       │
     │   the random access request carries     │
     │     the random access preamble          │
     │ ───────────────────────────────────────►│
     │                                         │
     │                        ┌────────────────┴───────────────┐
     │                        │ S5014, receive the random       │
     │                        │ access request from the         │
     │                        │ network device                  │
     │                        └────────────────┬───────────────┘
     │                                         │
     │                        ┌────────────────┴───────────────┐
     │                        │ S502, acquire indication        │
     │                        │ information, where the          │
     │                        │ indication information is        │
     │                        │ used to indicate a terminal      │
     │                        │ whether the terminal needs to    │
     │                        │ adjust time information of       │
     │                        │ the terminal                    │
     │                        └────────────────┬───────────────┘
     │                                         │
     │    S504, send the indication            │
     │    information to the terminal          │
     │ ◄───────────────────────────────────────│
     │                                         │
┌────┴───────────────────┐                     │
│ S506, receive the       │                    │
│ indication information   │                   │
│ from the network device  │                   │
└────┬───────────────────┘                     │
     │                                         │
┌────┴───────────────────┐                     │
│ S508, when the          │                    │
│ indication information   │                   │
│ indicates that the       │                   │
│ terminal needs to adjust │                   │
│ the time information,    │                   │
│ adjust the time          │                   │
│ information              │                   │
└────┬───────────────────┘                     │
     │                                         │
```

FIG. 6

Terminal

Network
device

S502, acquire indication information,
where the indication information is
used to indicate the terminal whether
the terminal needs to adjust time
information of the terminal

S5052, send a random access
response to the terminal

S5054, receive the the random access
response from the network device

S504, send the indication
information to the terminal

S506, receive the indication
information from the network device

S508, when the indication
information indicates that the
terminal needs to adjust the time
information, adjust the time
information

FIG. 7

```
┌─────────────┐                      ┌─────────────┐
│             │                      │   Network   │
│  Terminal   │                      │   device    │
│             │                      │             │
└──────┬──────┘                      └──────┬──────┘
       │                                    │
       │   S5002, send uplink data to       │
       │      the network device            │
       │───────────────────────────────────▶│
       │                                    │
       │              ┌─────────────────────┴──────────────┐
       │              │ S502, acquire indication information,│
       │              │  where the indication information is │
       │              │ used to indicate the terminal whether│
       │              │  the terminal needs to adjust time   │
       │              │    information of the terminal       │
       │              └─────────────────────┬──────────────┘
       │      S504, send the indication      │
       │     information to the terminal     │
       │◀───────────────────────────────────│
       │                                    │
┌──────┴──────────────────┐                 │
│ S506, receive the       │                 │
│  indication             │                 │
│ information from the    │                 │
│   network device        │                 │
└──────┬──────────────────┘                 │
       │                                    │
┌──────┴──────────────────┐                 │
│ S508, when the indication│                │
│ information indicates that the│            │
│ terminal needs to adjust the time│         │
│ information, adjust the time │             │
│    information          │                 │
└──────┬──────────────────┘                 │
       │                                    │
```

FIG. 8

| I | Timing Advance Command | Oct 1 |
|---|---|---|
| Timing Advance Command | UL Grant | Oct 2 |
| UL Grant | | Oct 3 |
| UL Grant | | Oct 4 |
| UL Grant | | Oct 5 |
| Temporary C-RNTI | | Oct 6 |
| Temporary C-RNTI | | Oct 7 |

FIG. 9

| R | Timing Advance Command | Oct 1 |
|---|---|---|
| Timing Advance Command | UL Grant | Oct 2 |
| UL Grant | | Oct 3 |
| UL Grant | | Oct 4 |
| UL Grant | | Oct 5 |
| Temporary C-RNTI | | Oct 6 |
| Temporary C-RNTI | | Oct 7 |

10A

| R | UL Grant | Oct 1 |
|---|---|---|
| UL Grant | | Oct 2 |
| UL Grant | | Oct 3 |
| UL Grant | | Oct 4 |
| Temporary C-RNTI | | Oct 5 |
| Temporary C-RNTI | | Oct 6 |

10B

FIG. 10

| | | | |
|---|---|---|---|
| R | Timing Advance Command | | Oct 1 |
| Timing Advance Command | | UL Grant | Oct 2 |
| UL Grant | | | Oct 3 |
| UL Grant | | | Oct 4 |
| UL Grant | | | Oct 5 |
| Temporary C-RNTI | | | Oct 6 |
| Temporary C-RNTI | | | Oct 7 |

11A

| | | | |
|---|---|---|---|
| R | Timing Advance Command | | Oct 1 |
| Timing Advance Command | | UL Grant | Oct 2 |
| UL Grant | | | Oct 3 |
| UL Grant | | | Oct 4 |
| UL Grant | | | Oct 5 |
| Temporary C-RNTI | | | Oct 6 |
| Temporary C-RNTI | | | Oct 7 |
| L | | | Oct 8 |

11B

FIG. 11

| | | | | |
|---|---|---|---|---|
| I | Timing Advance Command | | | Oct 1 |
| Timing Advance Command | R | R | R | Oct 2 |
| Temporary C-RNTI | | | | Oct 3 |
| Temporary C-RNTI | | | | Oct 4 |

FIG. 12

| | | |
|---|---|---|
| I | Timing Advance Command | Oct 1 |
| Timing Advance Command | UL Grant | Oct 2 |
| UL Grant | | Oct 3 |
| UL Grant | | Oct 4 |
| UL Grant | | Oct 5 |
| R | R | Oct 6 |

FIG. 13

| I | Timing Advance Command | | | | Oct 1 |
| Timing Advance Command | | R | R | R | Oct 2 |

FIG. 14

| R | Timing Advance Command | | | | Oct 1 |
| Timing Advance Command | | R | R | R | Oct 2 |

FIG. 15

| R | Timing Advance Command | | | | Oct 1 |
| Timing Advance Command | | L | R | R | Oct 2 |

16A

| R | Timing Advance Command | | | | Oct 1 |
| Timing Advance Command | | R | R | R | Oct 2 |

16B

FIG. 16

FIG. 17

When indicating not to
perform adjustment, restart the
time alignment timer

When indicating to
perform adjustment

Start a time
alignment timer | Timing of the
TAT expires | Restart the time
alignment timer | Timing of the
TAT expires

→ Time

The terminal
completes
the adjustment of
the time
information per se

The terminal
sends a random
access request
to the network
device

The terminal
completes
the adjustment of
the time
information per se

The terminal
sends a random
access request to
the network device

The terminal adjusts the
time information per se

FIG. 18

191    192

Transceiving
module | Processing
module

Terminal

FIG. 19

202    201

Transceiving
module | Processing
module

Network device

FIG. 20

211    213

Terminal    Processor    Communication interface

Memory

212

FIG. 21

221    223

Network device    Processor    Communication interface

Memory

222

FIG. 22

## INTERNATIONAL SEARCH REPORT

| | International application No. |
|---|---|
| | **PCT/CN2020/073318** |

### A.  CLASSIFICATION OF SUBJECT MATTER

H04W 56/00(2009.01)i;  H04W 24/02(2009.01)i

According to International Patent Classification (IPC) or to both national classification and IPC

### B.  FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 指示, 同步, 时间, 时钟, 是否, 失同, 定时提前量, 判断, 失步, 调节, 随机接入响应, 终端, 用户, 随机接入, 调整, 偏移, RAR, random access response, indicate, judge, whether, time, clock, TA, timing advance, offset, adjust, synchronization, desynchronization

### C.  DOCUMENTS CONSIDERED TO BE RELEVANT

| Category* | Citation of document, with indication, where appropriate, of the relevant passages | Relevant to claim No. |
|---|---|---|
| X | CN 102223703 A (CHINA ACADEMY OF TELECOMMUNICATIONS TECHNOLOGY) 19 October 2011 (2011-10-19) description, paragraphs [0031]-[0087], and figures 3-8 | 1-62 |
| X | CN 107995636 A (HUAWEI TECHNOLOGIES CO., LTD.) 04 May 2018 (2018-05-04) description, paragraphs [0207]-[0372], and figures 8-26 | 1-62 |
| X | CN 108882260 A (SONY CORPORATION) 23 November 2018 (2018-11-23) description, paragraphs [0051]-[0087] | 1-62 |
| A | CN 110113122 A (HUAWEI TECHNOLOGIES CO., LTD.) 09 August 2019 (2019-08-09) entire document | 1-62 |
| A | CN 108012329 A (HUAWEI TECHNOLOGIES CO., LTD.) 08 May 2018 (2018-05-08) entire document | 1-62 |
| A | CN 102647783 A (BEIJING INNOFIDEI TECHNOLOGY CO., LTD.) 22 August 2012 (2012-08-22) entire document | 1-62 |
| A | US 2013100938 A1 (PANTECH CO., LTD.) 25 April 2013 (2013-04-25) entire document | 1-62 |

☐ Further documents are listed in the continuation of Box C.  ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **10 September 2020** | **27 September 2020** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**EP 4 093 102 A1**

<table>
<tr><td colspan="2" style="text-align:center">INTERNATIONAL SEARCH REPORT<br>Information on patent family members</td><td colspan="2">International application No.<br><br>**PCT/CN2020/073318**</td></tr>
</table>

| Patent document cited in search report | | | Publication date (day/month/year) | Patent family member(s) | | | Publication date (day/month/year) |
|---|---|---|---|---|---|---|---|
| CN | 102223703 | A | 19 October 2011 | None | | | |
| CN | 107995636 | A | 04 May 2018 | EP | 3522383 | A1 | 07 August 2019 |
| | | | | EP | 3522383 | A4 | 21 August 2019 |
| | | | | WO | 2018076956 | A1 | 03 May 2018 |
| | | | | US | 2019254052 | A1 | 15 August 2019 |
| | | | | VN | 64732 | A | 25 July 2019 |
| CN | 108882260 | A | 23 November 2018 | AU | 2018264196 | A1 | 02 January 2020 |
| | | | | CN | 110291823 | A | 27 September 2019 |
| | | | | WO | 2018205807 | A1 | 15 November 2018 |
| | | | | EP | 3614753 | A1 | 26 February 2020 |
| | | | | EP | 3614753 | A4 | 01 April 2020 |
| CN | 110113122 | A | 09 August 2019 | WO | 2019149100 | A1 | 08 August 2019 |
| CN | 108012329 | A | 08 May 2018 | CN | 109245876 | B | 03 September 2019 |
| | | | | US | 2020221508 | A1 | 09 July 2020 |
| | | | | EP | 3681218 | A1 | 15 July 2020 |
| | | | | CN | 109245876 | A | 18 January 2019 |
| | | | | CN | 110493870 | A | 22 November 2019 |
| | | | | WO | 2019062779 | A1 | 04 April 2019 |
| | | | | KR | 20200047690 | A | 07 May 2020 |
| | | | | IN | 202037011512 | A | 05 June 2020 |
| CN | 102647783 | A | 22 August 2012 | CN | 102647783 | B | 18 February 2015 |
| US | 2013100938 | A1 | 25 April 2013 | EP | 2771992 | A1 | 03 September 2014 |
| | | | | WO | 2013062279 | A1 | 02 May 2013 |
| | | | | KR | 20130045169 | A | 03 May 2013 |

Form PCT/ISA/210 (patent family annex) (January 2015)